# EUROPEAN PATENT SPECIFICATION

(11) **EP 1 433 947 B1**
(45) Date of publication and mention of the grant of the patent: **30.07.2008**
(21) Application number: 03104942.2
(22) Date of filing: 23.12.2003
(51) Int. Cl.: F02M 35/024, F02M 35/10, F02M 35/16, F02M 35/04

(54) **Internal combustion engine air filtering device**
Luftfiltervorrichtung für Brennkraftmaschine
Dispositif de filtrage d'air pour moteur à combustion interne

(30) Priority: 24.12.2002 IT TO20021120
(43) Date of publication of application: 30.06.2004
(73) Proprietor: OFFICINE METALLURGICHE G. CORNAGLIA S.p.A., 10092 Beinasco (IT)
(72) Inventor: Cornaglia, Umberto, 10027 Testona (IT); Rocca, Giorgio, 10131 Torino (IT)
(74) Representative: Jorio, Paolo

(56) References cited:
- EP-A- 0 930 430
- EP-A2- 0 534 079
- WO-A-20/04009214
- US-B1- 6 251 151
- PATENT ABSTRACTS OF JAPAN vol. 2000, no. 11, 3 January 2001 (2001-01-03) & JP 2000 227057 A (MAZDA MOTOR CORP), 15 August 2000 (2000-08-15)
- PATENT ABSTRACTS OF JAPAN vol. 2003, no. 10, 8 October 2003 (2003-10-08) & JP 2003 161216 A (TOYODA GOSEI CO LTD), 6 June 2003 (2003-06-06)

## Description

The present invention relates to an internal combustion engine air filtering device, particularly for vehicles, of the type usually connected hydraulically in series to and upstream from the engine intake manifold. The invention also relates to a replaceable filter cartridge for such a device.

As is known, e.g. from EP-A-0534079, filtering devices of the above type normally comprise a casing, normally defined by two half-shells connected removably and molded from synthetic plastic material; a combustion air inlet normally formed in one piece with the bottom half-shell; a combustion air outlet formed in one piece with the bottom or top half-shell, normally in a different position and some distance from the inlet; and a filter cartridge housed in fluidtight manner inside the casing, between the inlet and outlet, so as to substantially occupy most or all of the inner volume of the casing. To change or clean the filter cartridge, the casing must be opened, normally by removing from above the top half-shell, which is fixed to the bottom one by clips or screws. In actual use, the inlet and outlet are also connected by connecting pipes to the external air inlet of the vehicle and to the engine intake manifold respectively.

Filtering devices of the above type have various drawbacks, foremost of which is the limited amount of space available for the connecting pipes in the engine compartment of modern vehicles. As a result, assembly cost is often high, or the useful dimensions of the filter cartridge must be reduced, and/or the connecting pipes are of complex design with relatively high load losses.

The above problems are further compounded when the filtering device, as is increasingly the case in modern vehicles, is combined with a soundproofing device for eliminating/reducing intake noise of the engine. Such soundproofing devices, in fact, normally comprise resonant chambers necessarily formed using parts of the inner volume of the engine compartment, appropriately located along (or branching from) the connecting pipes.

Finally, location of the filter air inlet and outlet must be determined for each vehicle model, even when catering to the same type of engine, due to the space available in the engine compartment differing from one model to another. Which obviously rules out any substantial scale economy by mass producing the filtering device casings.

It is an object of the present invention to provide a combustion air filtering device for a vehicle internal combustion engine, designed to eliminate the aforementioned drawbacks, and which, in particular, is compact, cheap to produce and easy to assemble, allows maximum freedom in the design of the connecting pipes, and provides for an extremely low noise level.

According to the present invention, there is provided an internal combustion engine air filtering device, as claimed in Claim 1.

In short, the casing houses the filter cartridge inside a seat which only occupies part of the inner volume of the casing; and the casing is provided inside with partitions defining, in the remaining inner volume of the casing, respective air/connecting conduits for directing the air inside the casing to and from the filter cartridge seat, and respectively connected hydraulically to an air inlet and outlet located on the same side of the casing, opposite the filter cartridge seat.

In a preferred embodiment of the invention, the casing is sized to cover, in use, substantially the entire cylinder head of the internal combustion engine for which the filtering device is designed; and a bottom surface of the casing, facing the cylinder head in use, is provided integrally with a cushion of soundproofing material.

The connecting pipes can therefore always be connected to the same point or side of the casing, thus simplifying the layout of the pipes and enabling the same filtering device to be used for different vehicle and/or engine models. Moreover, given the substantially flat shape of the casing, which is relatively shallow but large in length and width, the filter cartridge can be located at "dead" points of the engine compartment that cannot normally be reached by the connecting pipes. In use, the casing, which is mostly empty, therefore covers the cylinder head of the engine, by being interposed between the engine and bonnet, and also has a soundproofing effect, which can be enhanced by providing the filtering device casing with a soundproofing member fitted integrally to or formed in one piece with the casing. Finally, the large inner volume of the conduits connecting the filter cartridge seat to the air inlet and outlet, and into which the partitions divide the inner volume of the casing not occupied by the filter cartridge, defines a resonant chamber capable in itself of reducing the intake noise of the engine; and the effect can be further enhanced by installing specific (e.g. Helmholtz resonator) devices inside the conduits, i.e. without cluttering up the engine compartment of the vehicle.

The invention also relates to a replaceable filter cartridge, specifically designed for use in the filtering device according to the invention.

A non-limiting embodiment of the present invention will be described by way of example with reference to the accompanying drawings, in which:
Figure 1 shows an exploded view in perspective of a preferred embodiment of the filtering device according to the present invention;
Figures 2 and 3 show two side sections along lines II-II and III-III of the Figure 1 filtering device.

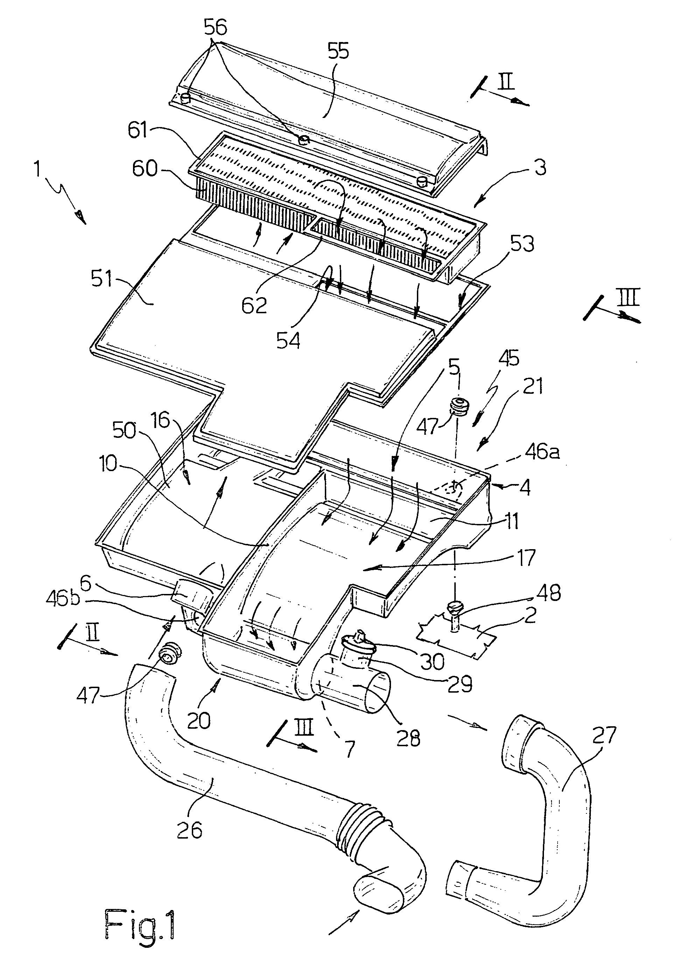

Number 1 in Figures 1 to 3 indicates a filtering device for filtering the (combustion) air of a known vehicle internal combustion engine 2 (of which only a cutaway of a portion of the cylinder head is shown for the sake of simplicity in Figure 1).

Device 1 comprises a casing 4; a filter cartridge 3 housed in fluidtight manner inside a seat 5 in casing 4; and an air inlet 6 and air outlet 7, formed in one piece with casing 4, and between which filter cartridge 3 is interposed hydraulically in series.

According to the invention, seat 5 housing filter cartridge 3 only occupies a relatively small part of the inner volume of casing 4; and casing 4 is provided inside with partitions 10, 11 defining, in the rest (the larger part) of the inner volume of casing 4, respective conduits 16, 17 connected hydraulically in series to seat 5 and respectively to air inlet 6 and air outlet 7. Conduits 16, 17, defined in the vacant part of the inner volume of casing 4 (i.e. the part not occupied by filter cartridge 3), thus act as hydraulic connecting members between seat 5 and inlet 6 and outlet 7 respectively, so as to direct the air inside casing 4 between inlet 6 and outlet 7 and to and from seat 5.

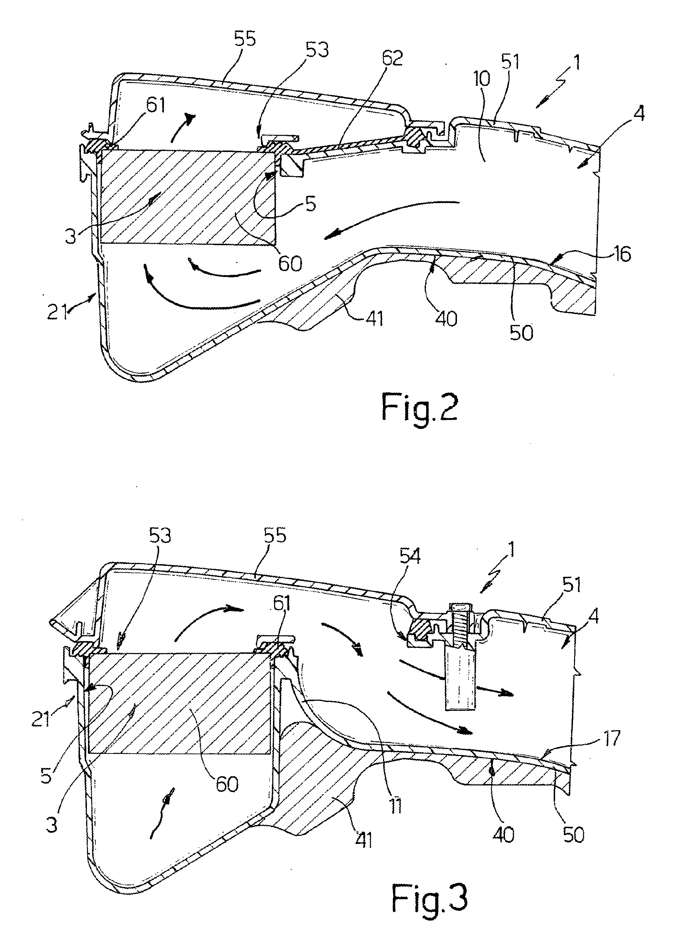

According to a further aspect of the invention, together with the above characteristic, inlet 6 and outlet 7 are both formed on a first side 20 of casing 4 (Figure 1) opposite a second side 21 of casing 4 (Figures 2, 3), and seat 5 is formed adjacent and parallel to and along the whole length of side 21. Side 20 is not shown in Figures 2 and 3, in which casing 4 is cut close to seat 5.

Filtering device 1 according to the invention also comprises air pipes 26, 27 (Figure 1) connectable removably in known manner, both at side 20 of casing 4, to air inlet 6 and air outlet 7 of casing 4 respectively, which are accordingly in the form of short sleeves projecting from side 20 of casing 4.

Completing the layout described, filtering device 1 preferably also comprises a tubular connecting sleeve 28 fittable integrally to the outside of casing 4, over air outlet 7, and projecting from casing 4. In the non-limiting embodiment shown, air outlet 7 is oriented in a direction substantially perpendicular to the axis of air inlet 6; and connecting sleeve 28 is T-shaped, and comprises a tubular, radially projecting, lateral branch 29 open at the free end and perpendicular to air outlet 7 (but with its axis generally lying in a plane other than that containing the axis of inlet 6), and a removable cap 30 which, in a preferred embodiment, can be fitted in fluidtight manner either to the open end of lateral branch 29, or to the end (obviously open) of connecting sleeve 28 opposite the end connected to outlet 7, so as to close either end.

Pipe 27 can thus be connected, as required, either directly to the open end of connecting sleeve 28 (with lateral branch 29 sealed by cap 30), or to the open end of lateral branch 29, by removing cap 30 and using it to close the open end of connecting sleeve 28.

According to a further aspect of the invention, casing 4 is relatively shallow but large in length and width, so as to be substantially flat and large enough to cover, in use, substantially the whole cylinder head of engine 2; and a bottom surface 40 of casing 4, facing the cylinder head of engine 2 in use, has an integral cushion 41 made of soundproofing material and fixed removably or not to casing 4.

For example, cushion 41 is made of synthetic plastic foam material, possibly with a high-density mineral filler (e.g. barium sulphate), and is either fixed integrally to casing 4, which is also made of synthetic plastic material by heat sealing or ultrasonic welding, or is formed, e.g. co-molded, in one piece with casing 4.

Given its large plan dimensions, which could make conventional assembly to engine 2 difficult, casing 4, according to another aspect of the invention, is provided with fast-fit fastening devices - indicated as a whole by 45 in Figure 1 (and only one of which is shown completely for the sake of simplicity) - for assembly to engine 2.

Devices 45 each comprise a hollow seat 46 (e.g. a seat 46a formed through a lug projecting from casing 4, or a dead seat 46b on a portion of casing 4) integrally housing a respective deformable sleeve 47 made of elastomeric material; and a stud 48, possibly with an enlarged end, which fits integrally to the cylinder head of engine 2 (or, if necessary, to the vehicle body) at the opposite end to the enlarged end (if any).

Device 1 can thus be assembled automatically by positioning casing 4, complete with cartridge 3, over the cylinder head of engine 2, and simply pushing it into position so that studs 48, positioned beforehand, click inside seats 46 with the interposition of sleeves 47, which, being elastically deformable, in addition to enabling click-on assembly, also compensate for any manufacturing tolerances, absorb any in-service vibration from engine 2 to casing 4, and so aid in greatly reducing running noise.

More specifically, casing 4 comprises a first cup-shaped bottom member 50 having seat 5 and partitions 10, 11 inside; and a second cup-shaped top member 51 shallower than and fitted integrally to member 50, with its concavity facing that of member 50.

Cup-shaped member 51 has a first through opening 53 corresponding with and of substantially the same plan dimensions as seat 5; and a second through opening 54 (Figures 1 and 3) alongside a portion of first through opening 53, on the opposite side to side 21 of casing 4. Casing 4 is complete with a lid 55 fitted removably and in fluidtight manner to close both through openings 53 and 54, e.g. fitted integrally to a top surface of member 51 by screws 56 or other known means (e.g. clips).

Filter cartridge 3 (shown only schematically in Figures 2 and 3) comprises (Figure 1) a known filtering element 60 (e.g. made of treated, pleated paper); and a supporting rim 61 made of elastomeric material and for supporting filtering element 60. Rim 61 is shaped to define internally a first flow cavity for a fluid for filtration (in this case, the air flowing along conduit 16 from inlet 16), and which houses filtering element 60 and is shaped to match through opening 53.

Rim 61 is provided laterally with a projecting frame 62 formed in one piece with and of the same material as rim 61, and shaped to define a second flow cavity for said fluid - in this case, the air flowing towards outlet 7 and relative conduit 17 inside casing 4 - extending alongside only a portion of the first cavity. The second cavity defined by frame 62 is in turn shaped to match through opening 54. Rim 61, together with projecting frame 62, is thus gripped, in use, between lid 55 and the outer (top) surface of cup-shaped member 51 to act as a peripheral seal for openings 53, 54.

## Claims

1. A filtering device (1) for filtering the air of an internal combustion engine, and of the type comprising a casing (4), a filter cartridge (3) housed in fluidtight manner inside a seat (5) in the casing (4), and an air inlet (6) and air outlet (7) formed in one piece with the casing (4); wherein said seat (5) for housing said filter cartridge (3) occupies only part of the inner volume of the casing (4); the casing having, internally, partitions (10, 11) defining, in the vacant rest of the inner volume of the casing, respective conduits (16, 17) for conducting the air inside the casing (4) to and from said seat (5) of the filter cartridge, and connected hydraulically to said air inlet and said air outlet (6, 7); the air inlet and air outlet both being formed on a first side (20) of the casing, on the opposite side to a second side (21) of the casing, said seat (5) being formed adjacent and parallel to and along the full length of said second side (21); **characterized in that** said casing (4) comprises a cup-shaped first member (50) having, internally, said seat (5) and said partitions (10, 11); a cup-shaped second member (51) shallower than and fitted integrally to the first member (50), with its concavity facing that of the first member, the cup-shaped said second member (51) having a first through opening (53) corresponding with said seat (5) and of substantially the same plan dimensions as said seat (5), and a second through opening (54) located spaced from said second side (21) alongside a portion of said first through opening (53) so as to define a flow cavity to a part of said vacant rest of the inner volume on one side of said partitions (10,11) defining said conduits, there being a closed area alongside a portion of said first through opening (53) corresponding to said vacant rest of the inner volume on the other side of said partitions (10,11) defining said conduits.

2. A filtering device (1) as claimed in Claim 1, **characterized by** also comprising respective air pipes (26, 27) connectable removably, on the same said first side (20), to said air inlet and said air outlet (6, 7) of the casing (4).

3. A filtering device (1) as claimed in Claim 1 or 2, **characterized by** also comprising a connecting sleeve (28) fittable integrally to the outside of the casing (4), over said air outlet (7), and projecting with respect to the casing; the air outlet being oriented in a direction substantially perpendicular to said air inlet (6); and said connecting sleeve (28) comprising a radially projecting lateral branch (29), oriented perpendicularly to said air outlet (7), and a removable cap (30).

4. A filtering device (1) as claimed in any one of the foregoing Claims, **characterized in that** said casing (4) is so sized as to cover, in use, substantially the whole of a cylinder head of said internal combustion engine (2); a bottom surface (40) of said casing (4), facing said cylinder head in use, having an integral cushion (41) made of soundproofing material and fixed removably or not to said casing (4).

5. A filtering device (1) as claimed in Claim 4, **characterized in that** said cushion (41) of soundproofing material is made of synthetic plastic foam material, possibly containing a mineral filler, and is either fixed integrally to said casing (4), which is made of synthetic plastic material by heat sealing or ultrasonic welding, or is co-molded in one piece with said casing (4).

6. A filtering device (1) as claimed in one of the foregoing Claims, **characterized in that** said casing (4) has fast-fit fastening devices (45) for assembly to a cylinder head of said internal combustion engine (2); said fast-fit fastening devices (45) comprising respective hollow seats (46a; 46b), each integrally housing a respective deformable sleeve (47) made of elastomeric material; and respective studs (48), each possibly with an enlarged end, which fit integrally to said cylinder head, at the opposite end to the enlarged end.

7. A filtering device (1) as claimed in any one of the foregoing Claims, **characterized in that** said casing (4) further comprises a lid (55) fitted removably and in fluidtight manner to close said first and said second through opening (53, 54) in the cup-shaped second member (51).

8. A filtering device (1) as claimed in Claim 7, **characterized in that** said filter cartridge (3) comprises a filtering element (60), and a rim (61), preferably made of elastomeric material, and for supporting the filtering element (60); said rim (61) being shaped to match said first through opening (53), and having, laterally, a projecting frame (62) formed in one piece with and from the same material as said rim and shaped to match said second through opening (54); said rim (61), together with the projecting frame (62), being gripped between said lid (55) and an outer surface of the cup-shaped said second member (51) to serve as a peripheral seal for said first and said second through opening (53, 54).

## Patentansprüche

1. Filtervorrichtung (1) zum Filtern der Luft einer Brennkraftmaschine, und von dem Typ, der ein Gehäuse (4), eine Filterkartusche (3), die in flüssigkeitsdichter Weise innerhalb eines Sitzes (5) in dem Gehäuse (4) untergebracht ist, und einen Lufteinlass (6) und Luffauslass (7) umfasst, die einstückig mit dem Gehäuse (4) gebildet sind; wobei der Sitz (5) zum Unterbringen der Filterkartusche (3) nur einen Teil des Innenvolumens des Gehäuses (4) belegt; wobei das Gehäuse intern Trennwände (10, 11) aufweist, die in dem freien Rest des Innenvolumens des Gehäuses jeweilige Leitungen (16, 17) zum Leiten der Luft innerhalb des Gehäuses (4) zu dem Sitz (5) der Filterkartusche und davon weg definieren, und die hydraulisch mit dem Lufteinlass und dem Luftauslass (6, 7) verbunden sind; wobei der Lufteinlass und der Luftauslass beide auf einer ersten Seite (20) des Gehäuses gebildet sind, auf der einer zweiten Seite (21) des Gehäuses gegenüberliegenden Seite, wobei der Sitz (5) benachbart und parallel zu und entlang der vollen Länge der zweiten Seite (21) gebildet ist; **dadurch gekennzeichnet, dass** das Gehäuse (4) ein becherförmiges erstes Bauteil (50), dass intern den Sitz (5) und die Trennwände (10, 11) aufweist; ein becherförmiges zweites Bauteil (51) umfasst, das flacher als und integral in das erste Bauteil (50) eingepasst ist, wobei seine Konkavität der des ersten Bauteils zugewandt ist, wobei das becherförmige zweite Bauteil (51) eine erste Durchgangsöffnung (53), die mit dem Sitz (5) übereinstimmt und von im Wesentlichen denselben ebenen Dimensionen ist, wie der Sitz (5), und eine zweite Durchgangsöffnung (54) aufweist, die sich beabstandet von der zweiten Seite (21) entlang eines Abschnittes der ersten Durchgangsöffnung (53) befindet, um so einen Fließhohlraum zu einem Teil des freien Rests des Innenvolumens auf einer Seite der Trennwände (10, 11), die die Leitungen definieren, zu definieren, wobei es einen geschlossenen Bereich entlang eines Abschnitts der ersten Durchgangsöffnung (53) gibt, der mit dem freien Rest des Innenvolumens auf der anderen Seite der Abschnitte (10, 11) übereinstimmt, die die Leitungen definieren.

2. Filtervorrichtung (1) nach Anspruch 1, **dadurch gekennzeichnet, dass** sie ebenfalls jeweilige Luftrohre (26, 27) umfasst, die auf derselben ersten Seite (20) mit dem Lufteinlass und dem Luftauslass (6, 7) des Gehäuses (4) entfernbar verbindbar sind.

3. Filtervorrichtung (1) nach Anspruch 1 oder 2, **dadurch gekennzeichnet, dass** sie ebenfalls eine Verbindungsmuffe (28) umfasst, die an der Außenseite des Gehäuses (4) integral angebracht werden kann, über dem Luftauslass (7), und die in bezug auf das Gehäuse hervorspringt; wobei der Luftauslass in einer zu dem Lufteinlass (6) im Wesentlichen rechtwinkligen Richtung orientiert ist; und wobei die Verbindungsmuffe (28) eine radial hervorspringende seitliche Abzweigung (29), die rechtwinklig zu dem Luftauslass (7) orientiert ist, und eine entfernbare Kappe (30) umfasst.

4. Filtervorrichtung (1) nach irgendeinem der vorangehenden Ansprüche, **dadurch gekennzeichnet, dass** das Gehäuse (4) so dimensioniert ist, dass es im Gebrauch im Wesentlichen das Ganze eines Zylinderkopfes der Brennkraftmaschine (2) abdeckt; wobei eine Bodenfläche (40) des Gehäuses (4), die dem Zylinderkopf im Gebrauch zugewandt ist, ein integrales Kissen (41) aufweist, das aus schalldämmendem Material gemacht ist und entfernbar oder nicht an dem Gehäuse (4) befestigt ist.

5. Filtervorrichtung (1) nach Anspruch 4, **dadurch gekennzeichnet, dass** das Kissen (41) aus schalldämmendem Material aus synthetischem Plastikschaumstoff gemacht ist, der möglicherweise einen Mineralfüllstoff enthält, und entweder integral an dem Gehäuse (4), das aus synthetischem Plastikmaterial gemacht ist, durch Heißkleben oder Ultraschallschweißen befestigt ist, oder einstückig mit dem Gehäuse (4) zusammen geformt wird.

6. Filtervorrichtung nach einem der vorangehenden Ansprüche, **dadurch gekennzeichnet, dass** das Gehäuse (4) Schnellschlussbefestigungsvorrichtungen (45) zur Montage an einen Zylinderkopf der Brennkraftmaschine (2) aufweist; wobei die Schnellschlussbefestigungsvorrichtungen (45) jeweilige hohle Sitze (46a, 46b) umfassen, die jeder integral eine jeweilige verformbare Muffe (47), die aus elastomerem Material gemacht ist; und jeweilige Bolzen (48) unterbringen, jeder möglicherweise mit einem vergrößerten Ende, die integral zu dem Zylinderkopf passen, an dem dem vergrößerten Kopf gegenüberliegenden Ende.

7. Filtervorrichtung (1) nach irgendeinem der vorangehenden Ansprüche, **dadurch gekennzeichnet, dass** das Gehäuse (4) ferner einen Deckel (55) umfasst, der entfernbar und in flüssigkeitsdichter Weise angepasst ist, um die erste und die zweite Durchgangsöffnung (53, 54) in dem becherförmigen zweiten Bauteil (51) zu schließen.

8. Filtervorrichtung (1) nach Anspruch 7, **dadurch gekennzeichnet, dass** die Filterkartusche (3) ein Filterelement (60) und einen Rand (61), bevorzugt aus elastomerem Material und zum Tragen des Filterelements (60), umfasst; wobei der Rand (61) so geformt ist, dass er zu der ersten Durchgangsöffnung (53) passt, und lateral einen vorspringenden Rahmen (62) aufweist, der einstückig mit und aus demselben Material gebildet ist, wie der Rahmen und geformt ist, zu der zweiten Durchgangsöffnung (54) zu passen; wobei der Rahmen (61) zusammen mit dem vorspringenden Rahmen (62) zwischen dem Deckel (55) und einer äußeren Oberfläche des becherförmigen zweiten Bauteils (51) geklemmt ist, um als eine Randabdichtung für die erste und die zweite Durchgangsöffnung (53, 54) zu dienen.

## Revendications

1. Système de filtration pour filtrer l'air d'un moteur à combustion interne comprenant un boîtier (4), une cartouche filtre (3) logée de manière étanche dans le siège (5) du boîtier (4), une entrée d'air (6) et une sortie d'air (7) ne faisant qu'une seule pièce avec le boîtier (4) ; par lequel ledit siège (5) pour loger ladite cartouche filtre (3) occupe seulement une partie du volume intérieur du boîtier (4) ; le boîtier ayant, en interne, des partitions (10, 11) définissant, dans l'espace laissé vacant du volume intérieur du boîtier, des conduits (16,17) pour amener l'air à l'intérieur du boîtier (4) vers et à partir du siège (5) de la cartouche filtre, en étant reliés hydrauliquement à ladite entrée d'air et à ladite sortie d'air (6,7); la sortie et l'entrée d'air étant toutes deux formées d'une première face (20) du boîtier et d'une seconde face (21) sur le côté opposé, ledit siège (5) étant adjacent et parallèle à toute la longueur de ladite seconde face (21) ; **caractérisé en ce que** ledit boîtier (4) comprend une première partie en forme de coupe possédant, en interne, ledit siège (5) et lesdites partitions (10,11) ; une deuxième partie (51) en forme de coupe moins profonde et montée intégralement sur la première partie (50), avec sa partie concave faisant face à celle de la première partie, ladite seconde partie en forme de coupe (51) possédant une ouverture (53) correspondant avec ledit siège (5), et une seconde ouverture (54) espacée de ladite seconde face (21) le long d'une portion de ladite première ouverture (53) afin de définir une cavité vers une partie de l'espace resté vacant du volume intérieur d'un côté desdites partitions (10,11) définissant lesdits conduits, constituant ainsi une zone fermée le long d'une portion de ladite première ouverture (53) correspondant à l'espace vacant du volume intérieur de l'autre côté desdites partitions (10,11) définissant lesdits conduits.

2. Système de filtration (1) selon la revendication 1, **caractérisé par le fait qu'**il comprend également des tuyaux d'air (26,27) connectables et démontables, sur la même première face (20), à l'entrée d'air et à la sortie d'air (6,7) du boîtier (4).

3. Système de filtration (1) selon les revendications 1 ou 2, **caractérisé par le fait qu'**il comprend également un manchon (28) qui est monté intégralement sur l'extérieur du boîtier (4), par dessus la sortie d'air (7), et qui fait saillie hors du boîtier ; la sortie d'air étant orientée dans une direction substantiellement perpendiculaire à ladite entrée d'air (6) ; et ledit manchon (28) comprenant une branche (29) latérale qui se projette radialement, orientée perpendiculairement à ladite sortie d'air (7), et un bouchon démontable (30).

4. Système de filtration (1) selon n'importe laquelle des revendications précédentes, **caractérisé en ce que** le boîtier (4) est dimensionné de façon à couvrir substantiellement, lors de l'utilisation, l'ensemble de la culasse dudit moteur à combustion (2) ; une surface inférieure (40) dudit boîtier (4), faisant face à cette culasse lors de l'utilisation, possédant un coussin (41) dans un matériau insonorisant et fixé de manière démontable sur ledit boîtier (4).

5. Système de filtration (1) selon la revendication 4, **caractérisé en ce que** ledit coussin (41) en matériau insonorisant est fabriqué en mousse plastique synthétique, avec éventuellement un filler minéral, et il est soit intégralement fixé audit boîtier (4) en plastique synthétique par thermosoudage ou par soudure ultrasons, soit co-moulé en une seule pièce avec ledit boîtier (4).

6. Système de filtration (1) selon l'une des revendications précédentes, **caractérisé en ce que** ledit boîtier (4) possède des fixations rapides (45) pour montage sur la culasse dudit moteur à combustion (2), lesdites fixations rapides (45) comprenant des sièges creux respectifs (46a, 46b), chacun abritant intégralement un manchon déformable (47) fabriqué en matériau élastomère, avec des goujons (48), chacun ayant éventuellement une extrémité élargie, qui se montent intégralement dans la culasse, côté opposé à l'extrémité élargie.

7. Système de filtration (1) selon l'une quelconque des revendications précédentes, **caractérisé en ce que** ledit boîtier (4) comprend également un cache (55) monté de manière démontable et étanche sur ladite première et seconde ouvertures (53,54) dans la seconde partie en forme de coupe (51).

8. Système de filtration (1) selon la revendication 7, **caractérisé en ce que** ladite cartouche filtre (3) comprend un élément filtrant (60), et un support (61) fabriqué de préférence en matériau élastomère, afin de supporter l'élément filtrant (60) ; ledit support (61) possédant une forme qui correspond à ladite première ouverture (53), et possédant, latéralement, un cadre qui se projette (62) et qui est formé en une seule pièce et dans le même matériau que ledit support et dont la forme correspond à ladite seconde ouverture (54) ; ledit support (61), avec le cadre (62), étant pris entre ledit cache (55) et une surface extérieure de ladite seconde partie en forme de coupe (51) afin de faire office de joint périphérique pour lesdites première et secondes ouvertures (53,54).
